# EUROPÄISCHE PATENTSCHRIFT

(11) **EP 2 284 102 B1**
(45) Veröffentlichungstag und Bekanntmachung des Hinweises auf die Patenterteilung: **17.07.2013**
(21) Anmeldenummer: 09010303.7
(22) Anmeldetag: 10.08.2009
(51) Int. Cl.: B65D 85/804, A47J 31/36

(54) **Portionskapsel sowie System mit einer Brühmaschine und einer Portionskapsel**
Single portion cartridge and system with a brewing machine and a single portion cartridge
Cartouche mono-dose et système doté d'une machine chauffante et d'une cartouche mono-dose

(43) Veröffentlichungstag der Anmeldung: 16.02.2011
(73) Patentinhaber: Tchibo GmbH, 22297 Hamburg (DE)
(72) Erfinder: Schulte, Walter, 57413 Finnentrop (DE); Heukamp, Wolfgang, 57413 Finnentrop (DE); Albers, Martin, 59846 Sundern (DE); Mauss, Sebastian, 22949 Ammersbek (DE); Zander, Wolfgang, 22941 Hammoor (DE); Ternité, Rüdiger, 21149 Hamburg (DE)
(74) Vertreter: UEXKÜLL & STOLBERG

(56) Entgegenhaltungen:
- EP-A1- 0 468 078
- EP-A1- 1 555 219
- WO-A1-2008/132571
- WO-A1-2008/148834
- CA-A- 900 870

## Beschreibung

Die Erfindung betrifft eine Portionskapsel, die insbesondere zum Brühen einzelner Getränkeportionen (z.B. eine Tasse oder zwei Tassen Kaffee) in einer für die Verwendung von Portionskapseln bestimmten Brühmaschine geeignet ist, sowie ein System mit einer Brühmaschine und einer derartigen Portionskapsel.

In der EP 1 344 722 A1 und auch in der EP 1 555 219 A1 ist eine Portionskapsel mit einem Kapseldeckel und einem Kapselboden beschrieben, die im Lieferzustand allseitig geschlossen ist und eine partikelförmige, mittels Wasser extrahierbare Kaffeesubstanz enthält. Dabei ist zwischen dem Kapseldeckel und der Kaffeesubstanz eine Verteilereinrichtung angeordnet, die mit Wasserdurchlassöffnungen versehen ist. Eine ähnlich aufgebaute Sieb- oder Sammeleinrichtung, die Getränkedurchlassöffnungen aufweist, befindet sich zwischen der Kaffeesubstanz und dem Kapselboden. Diese Portionskapsel wird in einer speziellen Kaffeemaschine verwendet, wobei beim Einsetzen der Portionskapsel in die Maschine oder während des Brühvorgangs der Kapseldeckel mit einem zentral angeordneten ersten Aufstechdorn und der Kapselboden mit einem zentral angeordneten zweiten Aufstechdorn perforiert werden. Dabei wird der erste Aufstechdorn in einer kegelförmigen Vertiefung in der Verteilereinrichtung aufgenommen, ohne die Verteilereinrichtung zu beschädigen. Eine entsprechende kegelförmige Vertiefung ist auch für die Siebeinrichtung vorgesehen. So gelangt durch eine Öffnung im Kapseldeckel heißes Wasser auf die Verteilereinrichtung und wird davon im Wesentlichen gleichmäßig verteilt, so dass die Kaffeesubstanz in der Portionskapsel weitgehend gleichmäßig extrahiert werden kann. Das fertige Getränk wird über die Siebeinrichtung zu einer Öffnung im Kapselboden geleitet, wo es aus der Portionskapsel austritt und von einem Gefäß (z.B. einer Tasse) aufgefangen werden kann. Eine derartige Portionskapsel ist auch aus der WO 2008/132571 bekannt.

Eine Brühmaschine, die zum Fertigen eines heißen Getränks mittels einer Portionskapsel eingerichtet ist, ist z.B. in der WO 2006/053635 A1 beschrieben. Diese Brühmaschine weist eine Druckwassereinrichtung, einen Portionskapselhalter und eine Steuerung auf. Dem Portionskapselhalter sind ein erstes und ein zweites Aufstechmittel zugeordnet, die jeweils als zentraler Dorn ausgestaltet und relativ zueinander bewegbar und dazu eingerichtet sind, beim oder nach dem Einsetzen der Portionskapsel in den Portionskapselhalter den Kapseldeckel bzw. den Kapselboden zu durchstoßen, so dass heißes Wasser durch den Kapseldeckel in den Innenraum der Portionskapsel und Getränk durch den Kapselboden aus der Portionskapsel gelangen kann.

Bei der vorbekannten Portionskapsel ist die Fertigung der Verteilereinrichtung und der Sammeleinrichtung durch Tiefziehen wegen der starken Krümmungen, die in manchen Bereichen der jeweiligen kegelförmigen Vertiefung auftreten, nicht unproblematisch. Da bei der vorbekannten Portionskapsel die Getränkesubstanz zwischen einer steifen Verteilereinrichtung und einer steifen Sammeleinrichtung eingeschlossen ist, bietet sich für den Benutzer ferner keine Möglichkeit, die Getränkesubstanz zu beeinflussen. Z.B. wäre es wünschenswert, Espressopulver vor dem Aufbrühen zu verdichten, was aber die vorbekannte Portionskapsel nicht zulässt.

Es ist daher Aufgabe der Erfindung, die vorbekannte Portionskapsel zu verbessern und auch die grundsätzliche Möglichkeit bereitzustellen, die Getränkesubstanz in der Portionskapsel vor dem Brühen der Portionskapsel zu verdichten.

Diese Aufgabe wird gelöst durch eine Portionskapsel mit den Merkmalen des Anspruchs 1 sowie durch ein System, das eine Brühmaschine und eine derartige Portionskapsel aufweist, mit den Merkmalen des Anspruchs 12. Vorteilhafte Ausgestaltungen der Erfindung ergeben sich aus den Unteransprüchen.

Die erfindungsgemäße Portionskapsel weist einen Kapseldeckel und einen Kapselboden auf, ist im Lieferzustand allseitig geschlossen und enthält eine partikelförmige, mittels Wasser extrahierbare Getränkesubstanz. Zwischen dem Kapseldeckel und der Getränkesubstanz ist eine Verteilereinrichtung angeordnet, die mit Wasserdurchlassöffnungen versehen ist. Die Verteilereinrichtung ist durch Kraftausübung auf ihren zentralen Bereich in einen Brühzustand verformbar, in dem der zentrale Bereich der Verteilereinrichtung einen größeren Abstand vom Kapseldeckel hat als im Lieferzustand (wobei der Kapseldeckel für die Definition dieser Geometrie als unverformt angenommen wird).

Wenn die Getränkesubstanz bis unter die Verteilereinrichtung gefüllt ist, lässt sich die Getränkesubstanz verdichten, bevor der Brühvorgang startet. Denn beim Übergang in den Brühzustand wird die Verteilereinrichtung durch Kraftausübung auf ihren zentralen Bereich vom Kapseldeckel weg verformt. Die in der Portionskapsel befindliche Getränkesubstanz wird dabei durch Berührung mit der Verteilereinrichtung verdichtet. Dies geschieht umso stärker, je dichter sich die Getränkesubstanz im Lieferzustand unterhalb der Verteilereinrichtung befindet. Wenn als Getränkesubstanz Mahlkaffee für Espresso verwendet wird, ist dieser Effekt von besonderem Vorteil. Denn gerade bei Espresso kommt es auf eine gute Verdichtung des Kaffeepulvers an, damit sich beim Brühvorgang in der Portionskapsel ein hoher Druck aufbauen kann, wodurch sich eine espressotypische Cremaschicht bildet und das Kaffeepulver optimal extrahiert wird. Da eine Portionskapsel insbesondere beim Transport Rüttelbewegungen und Vibrationen ausgesetzt ist, die zu einer Auflockerung des Kaffeepulvers in der Portionskapsel führen können, sollte die Verdichtung erst kurz vor dem Brühvorgang erfolgen.

Bei einem System mit einer Brühmaschine und einer derartigen Portionskapsel ist die Brühmaschine zum Fertigen eines heißen Getränks mittels einer Portionskapsel mit einem Kapseldeckel und einem Kapselboden eingerichtet und weist eine Druckwassereinrichtung, einen Portionskapselhalter und eine Steuerung auf. Dem Portionskapselhalter sind ein erstes und ein zweites Aufstechmittel zugeordnet, die relativ zueinander bewegbar und dazu eingerichtet sind, beim oder nach dem Einsetzen der Portionskapsel in den Portionskapselhalter den Kapseldeckel bzw. den Kapselboden zu durchstoßen. So kann heißes Wasser durch den Kapseldeckel in den Innenraum der Portionskapsel und Getränk durch den Kapselboden aus der Portionskapsel gelangen. Das erste Aufstechmittel ist dazu eingerichtet, nach Durchstechen des Kapseldeckels die zur Verformung der Verteilereinrichtung in den Brühzustand erforderliche Kraft auszuüben, ohne dabei die Verteilereinrichtung zu durchdringen.

Die Getränkesubstanz in der Portionskapsel lässt sich in besonders hohem Maße verdichten, wenn die Verteilereinrichtung im Lieferzustand der Portionskapsel auf den Kapseldeckel zu gewölbt ist und durch Kraftausübung auf ihren zentralen Bereich in einen Brühzustand verformbar ist, in dem die Verteilereinrichtung von dem Kapseldeckel weg gewölbt ist. Denn in diesem Fall kann die relative Volumenänderung der Getränkesubstanz besonders groß sein, da die Verteilereinrichtung bei ihrer Verformung einen relativ großen Weg zurücklegt.

Dass die erfindungsgemäße Portionskapsel die Möglichkeit bietet, die Getränkesubstanz vor dem Brühvorgang zu verdichten, ist eine Option und daher nicht zwingend erforderlich. Daher muss die Getränkesubstanz nicht bis dicht unter die Verteilereinrichtung gefüllt sein. Auch sind Ausgestaltungen der Verteilereinrichtung denkbar, bei denen die Verformung der Verteilereinrichtung gar keine größere Verdichtung der Getränkesubstanz bewirken kann. Es ist jedoch keine kegelartige Vertiefung wie bei der eingangs erläuterten vorbekannten Portionskapsel vorgesehen, die einen Aufstechdorn der Brühmaschine aufnehmen könnte, sondern das Aufstechmittel (z.B. ein Aufstechdorn) der Brühmaschine drückt nach Durchstechen des Kapseldeckels auf die Verteilereinrichtung und verformt sie dabei so stark, dass das Aufstechmittel in dem Zwischenraum zwischen dem Kapseldeckel und der in den Brühzustand verformten Verteilereinrichtung aufgenommen wird. Dabei wird die Verteilereinrichtung nicht durchdrungen. Die Verteilereinrichtung kann etwas beschädigt werden, aber nicht so stark, dass dabei ein größerer Anteil des Brühwassers direkt in die Getränkesubstanz eingeleitet wird, wodurch die Verteilereinrichtung ihre Funktion verlieren würde.

Um zu verhindern, dass das erste Aufstechmittel die Verteilereinrichtung durchdringt, kann z.B. der zentrale Bereich der Verteilereinrichtung verstärkt sein. Es ist auch denkbar, dass die Verteilereinrichtung eine hochelastische Membran aufweist, die z.B. als Einsatz im zentralen Bereich der Verteilereinrichtung gestaltet ist und/oder aus einem Silikonmaterial gefertigt ist, und die unter der Einwirkung des ersten Aufstechmittels stark nachgibt, dabei aber nicht zerreißt.

Bei einer bevorzugten Ausführungsform weist die Verteilereinrichtung einen peripheren Randbereich auf, der mit einer Profilierung versehen ist, wobei sich die Profilierung vorzugsweise umlaufend über den gesamten peripheren Randbereich erstreckt. Die Profilierung kann z.B. einen U-artig geformten Abschnitt aufweisen. Der periphere Randbereich der Verteilereinrichtung kann mit einer umlaufenden, auf den Kapseldekkel zu vorspringenden Verstärkungssicke versehen sein. Eine derartige Randprofilierung der Verteilereinrichtung sorgt für eine ausreichende Stabilität der Verteilereinrichtung, auch während der Verformung, und kann dabei selbst so verbogen werden und nachgeben, dass die Verformung der Verteilereinrichtung in der geometrisch gewünschten Weise ohne großen Kraftaufwand ermöglicht wird.

Vorzugsweise liegt der periphere Randbereich der Verteilereinrichtung an einer Stufe an, die in einer Seitenwandung der Portionskapsel ausgebildet ist. Dabei wird die Verteilereinrichtung sicher von der Stufe gestützt. Ferner kann die Portionskapsel in einfacher Weise montiert werden, indem die Verteilereinrichtung nach dem Einfüllen der Getränkesubstanz auf die Stufe aufgelegt und abschließend der Kapseldeckel aufgebracht wird.

Die Verteilereinrichtung kann dazu eingerichtet sein, nach im Brühzustand erfolgter Wärmeeinwirkung in der im Brühzustand eingenommenen Form zu verbleiben. Dies ist z.B. dann der Fall, wenn die Verteilereinrichtung aus einem thermoplastischen Kunststoff gefertigt ist, der unter der Einwirkung von heißem Brühwasser so weit erweicht wird, dass die durch die mechanische Verformung der Verteilereinrichtung bedingte Materialspannung verschwindet. Wenn eine Portionskapsel mit einer derartigen Verteilereinrichtung nach dem Brühvorgang aus der Brühmaschine entnommen wird, kann die Verteilereinrichtung nicht in ihren Anfangszustand zurückspringen und dabei z.B. Restflüssigkeit durch das Einstichloch im Kapseldeckel aus der Portionskapsel herausschleudern.

Bei bevorzugten Ausführungsformen der Erfindung ist zwischen der Getränkesubstanz und dem Kapselboden eine Siebeinrichtung angeordnet, die mit Getränkedurchlassöffnungen versehen ist. Diese Siebeinrichtung kann so wie bei der eingangs erläuterten vorbekannten Portionskapsel ausgestaltet sein, also als Sammeleinrichtung mit einer zentralen, auf das Kapselinnere zu gerichteten kegelförmigen Vertiefung, die das zweite Aufstechmittel der Brühmaschine aufnimmt, ohne dabei beschädigt zu werden.

Es ist aber auch denkbar, dass die Siebeinrichtung durch Kraftausübung auf ihren zentralen Bereich in einen Brühzustand verformbar ist, in dem der zentrale Bereich der Siebeinrichtung einen größeren Abstand vom Kapselboden hat als im Lieferzustand. Dabei kann die Kraft von dem zweiten Aufstechmittel der Brühmaschine ausgeübt werden, also z.B. dem Aufstechdorn, der beim Einsetzen der Portionskapsel in die Brühmaschine den Kapselboden durchdringt. Eine derartige Siebeinrichtung kann ähnlich wie die Verteilereinrichtung konstruiert sein, d.h. in allen in Bezug auf die Verteilereinrichtung erläuterten Ausführungsvarianten.

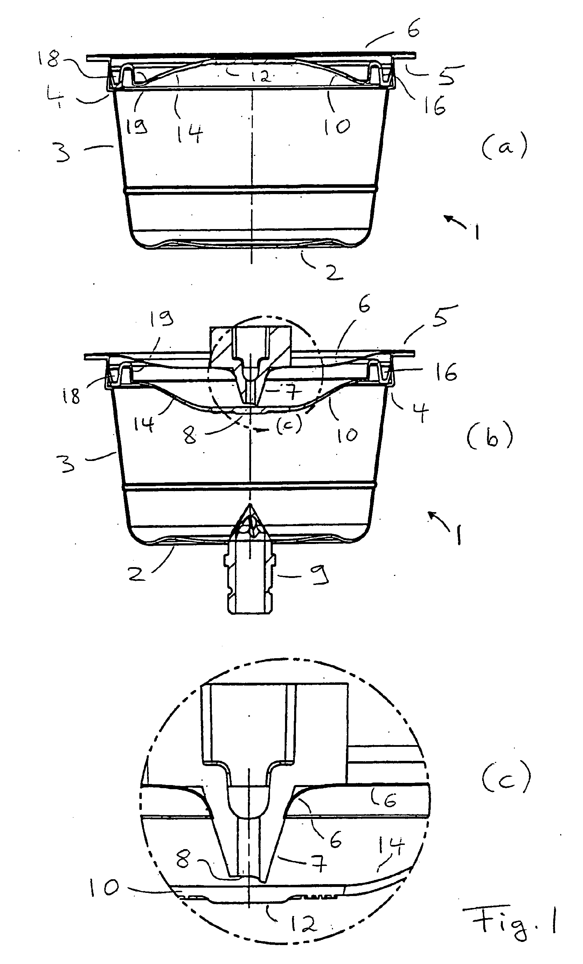

Im Folgenden wird die Erfindung anhand von Ausführungsbeispielen weiter beschrieben. Die Zeichnungen zeigen in
- Figur 1: eine Ausführungsform der erfindungsgemäßen Por- tionskapsel in schematischem Längsschnitt, und zwar in Teil (a) im Lieferzustand, in Teil (b) im Brühzu- stand, nachdem ein oberer Aufstechdorn einer Brühma- schine den Kapseldeckel und ein unterer Aufstechdorn der Brühmaschine den Kapselboden durchdrungen haben, und in Teil (c) eine Ausschnittsvergrößerung aus Teil (b).

In den Figuren 1 bis 4 sind vier Ausführungsformen einer Portionskapsel dargestellt, die mit 1, 1', 1" bzw. 1"' bezeichnet sind. Diese Ausführungsformen unterscheiden sich nur in der Gestaltung einer Verteilereinrichtung, wie nachfolgend im Einzelnen erläutert. Der Grundaufbau der Portionskapsel ist dagegen im Ausführungsbeispiel in allen Fällen gleich, weshalb bei allen Ausführungsformen für gleiche Teile dieselben Bezugszeichen verwendet werden.

Die Portionskapsel 1 in Figur 1 weist einen Kapselboden 2 auf, der in eine umlaufende Seitenwandung 3 übergeht. Im Ausführungsbeispiel hat die Portionskapsel 1 einen kreisförmigen Querschnitt. Im oberen Bereich der Seitenwandung 3 ist eine Stufe 4 vorgesehen. Von der Seitenwandung 3 geht am oberen Ende ein nach außen vorspringender umlaufender Flansch 5 aus. Diese Teile sind im Ausführungsbeispiel einstückig ausgebildet, z.B. durch Tiefziehen aus einem aromadichten Folienlaminat oder auch als Spritzteil.

Auf den Flansch 5 ist ein Kapseldeckel 6 aufgesiegelt, der im Ausführungsbeispiel aus einer Aluminiumfolie besteht.

In den Figuren sind einige nicht mit einem Bezugszeichen versehene Linien eingezeichnet, die im Wesentlichen parallel zum Kapselboden 2 verlaufen. Diese Linien deuten Stufen oder Ähnliches in der Seitenwandung 3 oder Umrisslinien an den weiter unten erläuterten Verteilereinrichtungen an, die sich aber nicht in der Schnittebene der jeweiligen Figur befinden. Die Schnittebene verläuft in allen Fällen durch die zentrale Längsachse der Portionskapsel.

Der Innenraum der Portionskapsel 1 ist mit einer Getränkesubstanz gefüllt, die sich mit Wasser extrahieren lässt, z.B. mit Mahlkaffee für Espresso, für Caffè Crema oder für Filterkaffee.

Eine Brühmaschine, in der sich die Portionskapsel 1 verwenden lässt, kann ähnlich aufgebaut sein wie die in der WO 2006/053635 A1 beschriebene Kaffeemaschine. Auf den Inhalt dieser Schrift wird zur Ergänzung des Offenbarungsgehalts der vorliegenden Anmeldung ausdrücklich hingewiesen. Die Brühmaschine besitzt einen zentralen oberen Aufstechdorn 7 (erstes Aufstechmittel) mit einem Brühwasserauslass 8 und einen zentralen unteren Aufstechdorn 9 (zweites Aufstechmittel), siehe Figur 1 (b). Von der Brühmaschine sind in den Figuren nur der obere Aufstechdorn 7 und der untere Aufstechdorn 9 dargestellt, da die übrigen Teile der Brühmaschine für das Verständnis der Portionskapsel und von deren Verteilereinrichtung nicht erforderlich sind. Der Aufstechdorn 7 kann außer dem in den Figuren sichtbaren zentralen Brühwasserauslass 8 noch weitere Öffnungen besitzen, z.B. zwei in den Figuren nicht eingezeichnete seitliche Öffnungen, die ebenso als Brühwasserauslass dienen; Ausführungsformen, bei denen nur seitliche Öffnungen vorkommen, sind ebenfalls denkbar.

Die Brühmaschine besitzt einen Portionskapselhalter, der im Ausführungsbeispiel ein separates Teil ist. Nachdem die Portionskapsel 1 in den Portionskapselhalter eingelegt worden ist, wird der Portionskapselhalter in die Brühmaschine eingeschoben und verriegelt. Bei dem Verriegelungsvorgang hebt sich der Portionskapselhalter mit der Portionskapsel 1, so dass der obere Aufstechdorn 7 den Kapseldeckel 6 durchdringt. Gleichzeitig (oder auch zu Beginn des Brühvorgangs bei einem Druckaufbau innerhalb der Portionskapsel 1) findet eine Relativbewegung zwischen dem Kapselboden 2 und dem unteren Aufstechdorn 9 statt, was zur Folge hat, dass der untere Aufstechdorn 9 in den Kapselboden 2 eindringt. Die Figur 1 (b) (und analog Figur 2 (b), Figur 3 (b) sowie Figur 4 (b)) zeigt diesen Zustand.

Bei der in Figur 1 dargestellten ersten Ausführungsform der Portionskapsel 1 liegt auf der Stufe 4 der Seitenwandung 3 eine Verteilereinrichtung 10 auf. Im Ausführungsbeispiel ist die Verteilereinrichtung 10 einstückig als Spritzteil ausgebildet.

Die Verteilereinrichtung 10 enthält einen zentralen Bereich 12, einen daran anschließenden, ringförmigen Übergangsbereich 14 und einen mit einer umlaufenden Profilierung versehenen peripheren Randbereich 16. Der Übergangsbereich 14 und auch die äußere Zone des zentralen Bereichs 12 sind mit Wasserdurchlassöffnungen versehen, die in den Figuren nicht eingezeichnet sind. Das Zentrum des zentralen Bereichs 12, das dem oberen Aufstechdorn 7 gegenüberliegt, siehe Figur 1 (c), ist dagegen verstärkt und enthält keine Wasserdurchlassöffnungen.

Die Profilierung des peripheren Randbereichs 16 weist außen einen umlaufenden Abschnitt mit U-artig geformtem Querschnitt auf, der auf der Stufe 4 aufliegt, und geht radial nach innen in eine nach oben vorspringende, umlaufende Verstärkungssicke 19 über.

Im Lieferzustand der Portionskapsel 1 ist die Verteilereinrichtung 10 auf den Kapseldeckel 6 zu gewölbt, siehe Figur 1(a). Dabei kann der im Wesentlichen ebene zentrale Bereich 12 an dem Kapseldeckel 6 anliegen. Im Ausführungsbeispiel der Figur 1 enthält die Portionskapsel 1 Mahlkaffee für Espresso, der bis dicht unter die Verteilereinrichtung 10 reicht.

Wenn nun die Portionskapsel 1 in der beschriebenen Weise in die Brühmaschine eingesetzt wird, durchdringt der obere Aufstechdorn 7 den Kapseldeckel 6 und bewegt anschließend, wenn er weiter ins Innere der Portionskapsel 1 vordringt, den zentralen Bereich 12 der Verteilereinrichtung 10 nach unten, bis der in Figur 1 (b) gezeigte Brühzustand erreicht ist. Da das Zentrum der Verteilereinrichtung 10 verstärkt ist, wird die Verteilereinrichtung 10 dabei nicht durchbrochen. Der Übergangsbereich 14 ist dünnwandiger als der zentrale Bereich 12 der Verteilereinrichtung 10 und kann daher nachgeben, um den Brühzustand gemäß Figur 1 (b) einnehmen zu können. Dies wird durch die Profilierung des peripheren Randbereichs 16 unterstützt, die in radialer Richtung nachgiebig ist, was insbesondere den Übergang der Verteilereinrichtung 10 von dem nach oben gewölbten Zustand gemäß Figur 1 (a) (Lieferzustand) in den nach unten gewölbten Zustand gemäß Figur 1 (b) (Brühzustand) erleichtert.

Das für die Getränkesubstanz zur Verfügung stehende Volumen verkleinert sich beim Übergang vom Lieferzustand zum Brühzustand, so dass dabei die Getränkesubstanz verdichtet werden kann. Dieser Effekt tritt umso stärker auf, je dichter die Getränkesubstanz im Lieferzustand der Portionskapsel 1 unter die Verteilereinrichtung 10 reicht.

In den Figuren nicht eingezeichnet ist eine Siebeinrichtung oder Sammeleinrichtung, die sich über dem Kapselboden 2 und unterhalb der Getränkesubstanz befindet und mit Getränkedurchlassöffnungen versehen ist. Diese Siebeinrichtung sorgt für eine gleichmäßige Verteilung des aufgebrühten Getränks und leitet das Getränk zu dem unteren Aufstechdorn 9. Der Aufstechdorn 9 hat im Ausführungsbeispiel Öffnungen im Bereich seiner Spitze, durch die das Getränk in den hohlen Innenraum des unteren Aufstechdorns 9 eintreten und die Brühmaschine verlassen kann.

Die Siebeinrichtung kann z.B. so konstruiert sein, wie in der eingangs erläuterten EP 1 344 722 A1 beschrieben. Bei dieser Gestaltung weist die Siebeinrichtung in ihrem zentralen Bereich eine kegelartige Vertiefung auf, die ins Innere der Portionskapsel 1 gerichtet ist und in die der untere Aufstechdorn 9 eintreten kann, ohne die Siebeinrichtung zu beschädigen.

In alternativen Ausführungsformen kann die Siebeinrichtung genauso gestaltet sein wie die Verteilereinrichtung 10.

Nochmals zusammengefasst, läuft der Brühvorgang nach Erreichen des Brühzustands der Portionskapsel 1 gemäß Figur 1 (b) also so ab, dass Brühwasser durch den oberen Aufstechdorn 7 (oder auch über dessen Außenseite durch die von dem oberen Aufstechdorn 7 geschaffene Öffnung im Kapseldeckel 6) in den Zwischenraum zwischen den Kapseldeckel 6 und der Verteilereinrichtung 10 gelangt und von dort aus über die Wasserdurchlassöffnungen in der Verteilereinrichtung 10 in die Getränkesubstanz unterhalb der Verteilereinrichtung 10. Der zentrale Bereich 12 wirkt dabei nicht als Verschluss für den oberen Aufstechdorn 7, da dessen Spitzenbereich etwas asymmetrisch geformt ist, siehe Figur 1 (c). Unter dem von der Brühmaschine erzeugten Druck wird die Getränkesubstanz extrahiert, und das Brühgetränk gelangt durch die in den Figuren nicht eingezeichnete Siebeinrichtung zu dem unteren Aufstechdorn 9 und von dort in ein Gefäß zum Auffangen des Brühgetränks.

## Patentansprüche

1. Portionskapsel,
- mit einem Kapseldeckel (6) und einem Kapselboden (2), die im Lieferzustand allseitig geschlossen ist und eine partikelförmige, mittels Wasser extrahierbare Getränkesubstanz enthält, wobei zwischen dem Kapseldeckel (6) und der Getränkesubstanz eine Verteilereinrichtung (10) angeordnet ist, die mit Wasserdurchlassöffnungen versehen ist,
- wobei die Verteilereinrichtung (10) durch Kraftausübung auf ihren zentralen Bereich (12) in einen Brühzustand verformbar ist, in dem der zentrale Bereich (12) der Verteilereinrichtung (10) einen größeren Abstand vom Kapseldeckel (6) hat als im Lieferzustand,
- **dadurch gekennzeichnet, dass** die Verteilereinrichtung (10) im Lieferzustand der Portionskapsel (1) auf den Kapseldeckel (6) zu gewölbt ist und durch Kraftausübung auf ihren zentralen Bereich (12) in einen Brühzustand verformbar ist, in dem die Verteilereinrichtung (10) von dem Kapseldeckel (6) weg gewölbt ist.

2. Portionskapsel nach Anspruch 1, **dadurch gekennzeichnet, dass** der zentrale Bereich (12) der Verteilereinrichtung (10) verstärkt ist.

3. Portionskapsel nach Anspruch 1, **dadurch gekennzeichnet, dass** die Verteilereinrichtung eine hochelastische Membran aufweist, die vorzugsweise als Einsatz im zentralen Bereich der Verteilereinrichtung gestaltet ist und die vorzugsweise aus einem Silikon gefertigt ist.

4. Portionskapsel nach einem der Ansprüche 1 bis 3, **dadurch gekennzeichnet, dass** die Verteilereinrichtung (10) einen peripheren Randbereich (16) aufweist, der mit einer Profilierung versehen ist, wobei sich die Profilierung vorzugs' weise umlaufend über den gesamten peripheren Randbereich (16) erstreckt.

5. Portionskapsel nach Anspruch 4, **dadurch gekennzeichnet, dass** die Profilierung einen U-artig geformten Abschnitt (18) aufweist.

6. Portionskapsel nach Anspruch 4 oder 5, **dadurch gekennzeichnet, dass** der periphere Randbereich (16) der Verteilereinrichtung (10) eine umlaufende, auf den Kapseldeckel (6) zu vorspringende Verstärkungssicke (19) aufweist.

7. Portionskapsel nach einem der Ansprüche 4 bis 6, **dadurch gekennzeichnet, dass** der periphere Randbereich (16) der Verteilereinrichtung (10) an einer Stufe (4) anliegt, die in einer Seitenwandung (3) der Portionskapsel (1) ausgebildet ist.

8. Portionskapsel nach einem der Ansprüche 1 bis 7, **dadurch gekennzeichnet, dass** die Verteilereinrichtung (10) dazu eingerichtet ist, nach im Brühzustand erfolgter Wärmeeinwirkung in der im Brühzustand eingenommenen Form zu verbleiben.

9. Portionskapsel nach einem der Ansprüche 1 bis 8, **dadurch gekennzeichnet, dass** die Getränkesubstanz bis unter die Verteilereinrichtung (10) gefüllt ist.

10. Portionskapsel nach einem der Ansprüche 1 bis 9, **dadurch gekennzeichnet, dass** zwischen der Getränkesubstanz und dem Kapselboden (2) eine Siebeinrichtung angeordnet ist, die mit Getränkedurchlassöffnungen versehen ist.

11. Portionskapsel nach Anspruch 10, **dadurch gekennzeichnet, dass** die Siebeinrichtung durch Kraftausübung auf ihren zentralen Bereich in einen Brühzustand verformbar ist, in dem der zentrale Bereich der Siebeinrichtung einen größeren Abstand vom Kapselboden (2) hat als im Lieferzustand.

12. System mit
- einer Brühmaschine, die zum Fertigen eines heißen Getränks mittels einer Portionskapsel (1) mit einem Kapseldeckel (6) und einem Kapselboden (2) eingerichtet ist und eine Druckwassereinrichtung, einen Portionskapselhalter und eine Steuerung aufweist, wobei dem Portionskapselhalter ein erstes (7) und ein zweites (9) Aufstechmittel zugeordnet sind, die relativ zueinander bewegbar und dazu eingerichtet sind, beim oder nach dem Einsetzen der Portionskapsel (1) in den Portionskapselhalter den Kapseldeckel (6) bzw. den Kapselboden (2) zu durchstoßen, so dass heißes Wasser durch den Kapseldeckel (6) in den Innenraum der Portionskapsel (1) und Getränk durch den Kapselboden (2) aus der Portionskapsel (1) gelangen kann, und
- einer Portionskapsel (1) nach einem der Ansprüche 1 bis 11,
- wobei das erste Aufstechmittel (7) dazu eingerichtet ist, nach Durchstechen des Kapseldeckels (6) die zur Verformung der Verteilereinrichtung (10) in den Brühzustand erforderliche Kraft auszuüben, ohne dabei die Verteilereinrichtung (10) zu durchdringen.

## Claims

1. Portion capsule,
- with a capsule lid (6) and a capsule base (2), which is closed on all sides in the delivery state and contains a particulate drink substance that can be extracted by means of water, wherein a distributor device (10) provided with water through-openings is arranged between the capsule lid (6) and the drink substance,
- wherein the distributor device (10) can be deformed by the exertion of force on its central region (12) into a brewing state, in which the central region (12) of the distributor device (10) has a greater spacing from the capsule lid (6) than in the delivery state,
- **characterised in that** the distributor device (10), in the delivery state of the portion capsule (1), is curved toward the capsule lid (6) and can be deformed by the exertion of force on its central region (12) into a brewing state, in which the distributor device (10) is curved away from the capsule lid (6).

2. Portion capsule according to claim 1, **characterised in that** the central region (12) of the distributor device (10) is reinforced.

3. Portion capsule according to claim 1, **characterised in that** the distributor device has a highly resilient membrane, which is preferably designed as an insert in the central region of the distributor device and is preferably manufactured from a silicone.

4. Portion capsule according to any one of claims 1 to 3, **characterised in that** the distributor device (10) has a peripheral edge region (16), which is provided with a profiling, the profiling preferably extending peripherally over the entire peripheral edge region (16).

5. Portion capsule according to claim 4, **characterised in that** the profiling has a portion (18) formed in a U-like manner.

6. Portion capsule according to claim 4 or 5, **characterised in that** the peripheral edge region (16) of the distributor device (10) has a peripheral reinforcement bead (19) projecting toward the capsule lid (6).

7. Portion capsule according to any one of claims 4 to 6, **characterised in that** the peripheral edge region (16) of the distributor device (10) rests on a step (4), which is configured in a side wall (3) of the portion capsule (1).

8. Portion capsule according to any one of claims 1 to 7, **characterised in that** the distributor device (10) is set up to remain in the shape adopted in the brewing state after the thermal action which took place in the brewing state.

9. Portion capsule according to any one of claims 1 to 8, **characterised in that** the drink substance is filled to below the distributor device (10).

10. Portion capsule according to any one of claims 1 to 9, **characterised in that** a sieve device provided with drink through-openings is arranged between the drink substance and the capsule base (2).

11. Portion capsule according to claim 10, **characterised in that** the sieve device can be deformed by the exertion of force on its central region into a brewing state, in which the central region of the sieve device has a greater spacing from the capsule base (2) than in the delivery state.

12. System with
- a brewing machine, which is set up to produce a hot drink by means of a portion capsule (1) with a capsule lid (6) and a capsule base (2) and has a pressurised water device, a portion capsule holder and a controller, a first (7) and a second (9) puncturing means being associated with the portion capsule container, said puncturing means being movable relative to one another and set up to puncture the capsule lid (6) or the capsule base (2) during or after the insertion of the portion capsule (1) into the portion capsule holder, so that hot water can arrive through the capsule lid (6) into the interior of the portion capsule (1) and drink can leave the portion capsule (1) through the capsule base (2), and
- a portion capsule (1) according to any one of claims 1 to 11,
- wherein the first puncturing means (7) is set up to exert the force required to deform the distributor device (10) into the brewing state after the capsule lid (6) has been punctured, without in the process piercing the distributor device (10).

## Revendications

1. Capsule,
- comprenant un opercule de capsule (6) et un fond de capsule (2), qui, à l'état de livraison, est fermée sur tous les côtés et contient une substance pour boisson sous forme de particules, susceptible d'être extraite au moyen d'eau, sachant qu'un dispositif de répartition (10), qui est doté d'orifices pour le passage d'eau, est placé entre l'opercule de capsule (6) et la substance pour boisson,
- le dispositif de répartition (10) pouvant être déformé en exerçant une force sur sa partie centrale (12), pour l'amener à un état de préparation de boisson chaude dans lequel la partie centrale (12) du dispositif de répartition (10) présente une distance par rapport à l'opercule de capsule (6) qui est plus grande qu'à l'état de livraison,
- **caractérisée en ce que** le dispositif de répartition (10), à l'état de livraison de la capsule (1), est incurvé en direction de l'opercule de capsule (6) et peut être déformé en exerçant une force sur sa partie centrale (12) pour être amené à un état de préparation de boisson chaude dans lequel le dispositif de répartition (10) est incurvé dans le sens opposé à l'opercule de capsule (6).

2. Capsule selon la revendication 1, **caractérisée en ce que** la partie centrale (12) du dispositif de répartition (10) est renforcée.

3. Capsule selon la revendication 1, **caractérisée en ce que** le dispositif de répartition présente une membrane très élastique qui est de préférence réalisée sous forme d'insert dans la partie centrale du dispositif de répartition et qui est de préférence fabriquée à partir d'une silicone.

4. Capsule selon l'une quelconque des revendications 1 à 3, **caractérisée en ce que** le dispositif de répartition (10) présente une partie de bord périphérique (16) qui est pourvue d'un profil, le profil s'étendant de préférence sur le pourtour, sur toute la partie de bord périphérique (16).

5. Capsule selon la revendication 4, **caractérisée en ce que** le profil présente une portion (18) en forme de U.

6. Capsule selon la revendication 4 ou 5, **caractérisée en ce que** la partie de bord périphérique (16) du dispositif de répartition (10) présente une moulure de renfort (19) périphérique, faisant saillie en direction de l'opercule de capsule (6).

7. Capsule selon l'une quelconque des revendications 4 à 6, **caractérisée en ce que** la partie de bord périphérique (16) du dispositif de répartition (10) est appliquée contre un gradin (4) qui est façonné dans une paroi latérale (3) de la capsule (1).

8. Capsule selon l'une quelconque des revendications 1 à 7, **caractérisée en ce que** le dispositif de répartition (10) est agencé pour que, après l'action de la chaleur à l'état de préparation de boisson chaude, il conserve la forme adoptée à l'état de préparation de boisson chaude.

9. Capsule selon l'une quelconque des revendications 1 à 8, **caractérisée en ce que** la substance pour boisson s'étend jusque sous le dispositif de répartition (10).

10. Capsule selon l'une quelconque des revendications 1 à 9, **caractérisée en ce qu'**un dispositif formant tamis, qui est doté d'orifices de passage pour la boisson, est placé entre la substance pour boisson et le fond de capsule (2).

11. Capsule selon la revendication 10, **caractérisée en ce qu'**en exerçant une force sur sa partie centrale, le dispositif formant tamis peut être déformé pour être amené dans un état de préparation de boisson chaude dans lequel la partie centrale du dispositif formant tamis se trouve à une distance du fond de capsule (2) qui est plus grande qu'à l'état de livraison.

12. Système comprenant :
- une machine de préparation de boissons chaudes qui est agencée pour la préparation d'une boisson chaude au moyen d'une capsule (1), comportant un opercule de capsule (6) et un fond de capsule (2), et présente un dispositif d'eau sous pression, un support de capsule et une commande, un premier (7) et un deuxième (9) moyen de perçage étant associés au support de capsule, qui peuvent être déplacés l'un par rapport à l'autre et sont conçus pour percer respectivement l'opercule de capsule (6) et le fond de capsule (2), pendant ou après la mise en place de la capsule (1) dans le support de capsule, de sorte que de l'eau chaude peut traverser l'opercule de capsule (6) et pénétrer à l'intérieur de la capsule (1), et que la boisson peut sortir de la capsule (1) en traversant le fond de capsule (2), et
- une capsule (1) selon l'une quelconque des revendications 1 à 11,
- le premier moyen de perçage (7) étant conçu pour exercer, après le perçage de l'opercule de capsule (6), la force qui est nécessaire pour déformer le dispositif de répartition (10) de manière à l'amener à l'état de préparation de boisson chaude, sans traverser pour autant le dispositif de répartition (10).
